# EUROPEAN PATENT APPLICATION

(11) **EP 4 745 526 A1**
(43) Date of publication of application: **20.05.2026**
(21) Application number: 25198048.8
(22) Date of filing: 26.08.2025
(51) Int. Cl.: G01C 21/36, G01C 21/34

(54) **DESTINATION RECOMMENDATION SYSTEM**

(30) Priority: 13.11.2024 JP 2024198124
(71) Applicant: TOYOTA JIDOSHA KABUSHIKI KAISHA, Toyota-shi, Aichi-ken 471-8571 (JP)
(72) Inventor: FUKUSHIMA, Shintaro, Toyota-shi, Aichi-ken, 471-8571 (JP)
(74) Representative: TBK

(57) **Abstract**

A destination recommendation system includes a plurality of recommendation agents that each recommend destinations to respective users, and a coordination agent that coordinates the recommendation agents. The coordination agent decides whether to present recommended content, or decides recommend content from among the recommended content candidates for each of the recommendation agents, based on a congestion situation of the destination, a destination vicinity parking lot congestion situation, or a route-to-destination congestion situation, when the destination is recommended to each of the recommendation agents, and current or past utility of each of the recommendation agents. The coordination agent includes AI.

## Description

### BACKGROUND OF THE INVENTION

### 1. Field of the Invention

The present disclosure relates to a destination recommendation system.

### 2. Description of Related Art

There has been disclosed technology for an in-vehicle navigation device recommending a destination or recommending points of interest (POIs) that are likely to interest a user, along a route to a destination.

Japanese Unexamined Patent Application Publication No. 2016-161998 (JP 2016-161998 A) discloses quantitatively defining a basic recommendation level of tourist destinations according to a total number of destination settings in multiple destination recommendation devices. Also, main factors that vary by user are modeled, in the form of penalty regarding travel time, penalty regarding tolerance for congestion, and penalty regarding whether the user has already visited the destination. A destination recommendation device is disclosed that can recommend destinations according to situations and preferences of each user.

### SUMMARY OF THE INVENTION

JP 2016-161998 A envisions recommending destinations individually to individual users. Accordingly, when the same destination is recommended to a plurality of users, a congestion situation at the destination, a congestion situation of parking lots in the vicinity of the destination, a route-to-destination congestion situation, and so forth, cannot be taken into consideration for each of the users.

The present disclosure has been made to solve such problems, and an object thereof is to provide a destination recommendation system and so forth that is capable of executing recommendation of appropriate destinations to multiple users.

A destination recommendation system according to an aspect of the present disclosure includes a plurality of recommendation agents each recommending a destination to each of users, and a coordination agent coordinating the recommendation agents, in which the recommendation agents estimate user preferences of respective users for a destination based on at least one of a destination search history, a destination visit history, a destination setting history, and a response history to recommended content, and estimate state-and-situation of the users based on at least one of vehicle behavior, driving operations, external camera video, in-cabin camera video, and biometric data of the users, generate recommended content candidates, utility of the recommended content candidates, date and time, and current locations of the users, respectively, based on the user preferences, and the state-and-situation of the users that are estimated, and at least one of a destination congestion situation, a destination vicinity parking lot congestion situation, and a route-to-destination congestion situation, and provide each of the recommended content candidates that are generated, the utility, the date and time, and the current locations of the users, to the coordination agent, the coordination agent decides, for each of the recommendation agents, whether to present recommended content, or decides a recommended content from among the recommended content candidates, based on at least one of the congestion situation of the destination, the congestion situation of parking lots in a vicinity of the destination, and the route-to-destination congestion situation at the time the destination was recommended to each of the recommendation agents, and also based on the current or past utility of each of the recommendation agents, and provides each of the recommendation agents with whether to present the recommended content that is decided upon, and the recommended content, and each of the recommendation agents executes presentation of the recommended content to each of the users based on whether to present the recommended content that is decided upon and the recommended content.

According to the present disclosure, when the same destination is recommended to multiple users, appropriate destinations can be recommended by taking into consideration the congestion situation at the destination, the congestion situation of parking lots in the vicinity of the destination, or the route-to-destination congestion situation.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a configuration of a destination recommendation system according to an embodiment; and
FIG. 2 is a diagram illustrating details of a recommended content candidate generating unit according to the embodiment.

### DETAILED DESCRIPTION OF EMBODIMENTS

A specific embodiment to which the present invention is applied will be described in detail below with reference to the drawings. Note, however, that the present invention is not limited to the following embodiment. Further, the following description and drawings are simplified as appropriate in order to clarify the description.

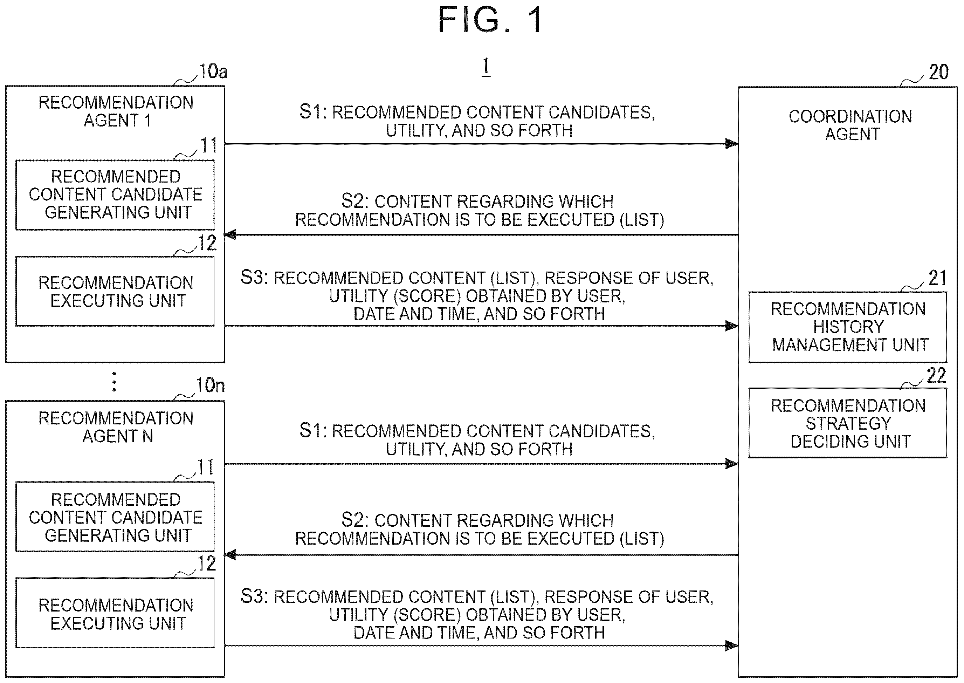

FIG. 1 is a diagram illustrating a configuration of a destination recommendation system according to the embodiment. The destination recommendation system 1 includes a plurality of recommendation agents 10a to 10n, and one or a plurality of coordination agents 20. The recommendation agents 10a to10n respectively recommend destinations to users A to N riding in respective vehicles, via display units or speakers.

Each of the recommendation agents 10a to 10n includes a recommended content candidate generating unit 11 and a recommendation executing unit 12. Each of the recommendation agents 10a to 10n is realized by a computer that is installed in a vehicle or in a center server of each vehicle controller system, and has functions of executing various types of control based on various types of programs that are stored in a storage unit. The vehicle is equipped with an in-vehicle navigation system. The recommendation agent can acquire various types of information (e.g., vehicle position information, map information) from the in-vehicle navigation system via a wired or wireless network, and can provide various types of information to the in-vehicle navigation system.

The recommended content candidate generating unit 11 generates recommended content candidates (or a list of recommended content candidates) and utility (score) thereof, by taking into consideration user preferences, current location, distance to destination, and so forth, which are estimated using past destination search history, settings history, destination visit history, and so forth, of the user. A utility function may be set in advance, or may be learned sequentially from data. Note that each of the recommendation agents generates a "recommended content candidate", and the coordination agent decides final "recommended content" from a plurality of recommended content candidates.

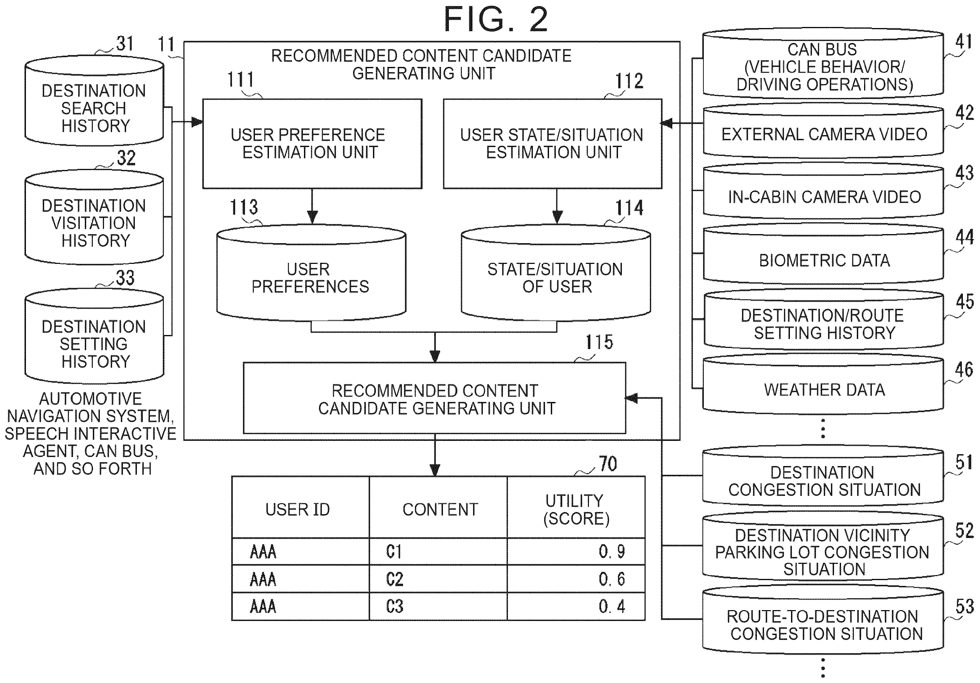

The recommended content candidate generating unit 11 will now be described in detail with reference to FIG. 2.

FIG. 2 is a diagram illustrating details of a recommended content candidate generating unit according to the embodiment.

The recommended content candidate generating unit 11 can execute (1) user preference estimation, (2) user state/situation estimation, and (3) recommended content candidate generation.

### (1) User Preference Estimation

A user preference estimation unit 111 is connected to a destination search history database (DB) 31, a destination visit history DB 32, and a destination setting history DB 33 (as well as an automotive navigation system, a speech interactive agent, a controller area network (CAN) bus, and so forth) of the in-vehicle navigation system via a wired or wireless network. The user preference estimation unit 111 estimates a user preference score for a destination genre of the user, from past history such as destination search history, destination visit history, destination setting history, response history to recommended content, and so forth. The user preference score may be estimated sequentially online, or may be estimated and updated periodically offline (batch).

Destination search and setting history can be acquired from the automotive navigation system, speech interactive agents, and apps and so forth of smartphones and so forth. Destination visit history can be acquired from the automotive navigation system, IG-off points of the CAN bus (vehicle behavior and driving operations), and so forth. As for response history to the recommended content, reactions of the user to the recommended content (e.g., approval, rejection, or the like) can be acquired. The preference estimation unit 111 stores preference data that is estimated in a user preference DB 113.

### (2) User State/Situation Estimation

A user state/situation estimation unit 112 is connected to a CAN bus (vehicle behavior/driving operations) 41, an external camera video DB 42, an in-cabin camera video DB 43, a biometric data DB 44, a destination/route setting history DB 45, and a weather DB 46. The user state/situation estimation unit 112 estimates the state/situation of the user, usage/state of the vehicle, daily lifestyle habits, and so forth, from the CAN bus (vehicle behavior/driving operations), external camera video, in-cabin camera video, biometric data, and so forth. Biometric data of the user can be acquired from a smart watch or a wearable device. A facial image of the user may be acquired from an in-cabin camera.

A combination of online estimation/updating of the user state/situation and batch estimation/updating of the state/situation thereof, or a form of just one or the other, may be used. Examples of the online estimation/updating of the user state/situation include, but are not limited to, fatigue level, drowsiness, tension, vehicle warnings, slippage, refueling/charging, weather, and so forth. Examples of the offline (batch) estimation/updating of the user state/situation include, but are not limited to, frequently visited places and date-of-week time thereof, frequently driven routes and date-of-week time thereof, and so forth. The state/situation estimation unit 112 stores the user state/situation data that is estimated in a user state/situation DB 114.

### (3) Recommended Content Candidate Generation

A recommended content candidate generating unit 115 is connected to the user preference DB 113 and the state/situation DB 114. The recommended content candidate generating unit 115 is also connected to a destination congestion situation DB 51, a destination vicinity parking lot congestion situation DB 52, and a route-to-destination congestion situation DB 53.

The recommended content candidate generating unit 115 generates recommended content candidates (list) from the preference scores for the destination genre and for the user state/situation that are estimated in (1) and (2) above, and for the current location, the date of the week, the time, and so forth. At that time, the utility (score) of the recommended content candidates (list) is also estimated. Also, the recommended content candidates include at least one or all of the destination congestion situation, the destination vicinity parking lot congestion situation, and the route-to-destination congestion situation. Note that the route-to-destination congestion situation can be acquired from the Vehicle Information and Communication System (VICS) (registered trademark). Also, the route-to-destination congestion situation may be estimated from the vehicle speed of each vehicle, acquired via connected car technology. The destination congestion situation may be acquired from a monitoring system or a seat reservation system at the destination (e.g., shop or restaurant). The destination vicinity parking lot congestion situation may be acquired from surveillance cameras or occupancy information systems of parking lots in the vicinity of the destination, or may be estimated from ignition off state of connected cars. As illustrated in FIG. 2, a recommended content list 70 that is generated indicates contents and utility (score) corresponding to the user ID. The list 70 recommends different contents (C1, C2, C3) to the same user having the same user ID. The utility of the content C1 is the highest, and the utility of the content C3 is the lowest.

Next, a recommendation history management unit 21 of the coordination agent 20 stores and manages the following information and the like presented by each recommendation agent 10 in a database. The information that is stored includes recommended contents (list), utility (score), date and time, current location, an ID that uniquely identifies the recommendation agent, recommended content candidates (list), utility (score), date and time, current location, and so forth.

Also stored are recommended contents (list), response of the user, utility (score) that is obtained by the user, date and time, an ID that uniquely identifies the recommendation agent, recommended contents (list), response of the user, utility (score) that is obtained by the user, date and time, and so forth.

Returning to FIG. 1 again, description will be continued. The recommendation executing unit 12 of the recommendation agent 10 presents the recommended content to be executed, which is transmitted from the coordination agent 20, to the user. Examples of the media for presenting the recommended content include, but are not limited to, an automotive navigation system, a speech interactive agent, apps of smartphones, and so forth.

The one or multiple coordination agents 20 include the recommendation history management unit 21 and a recommendation strategy deciding unit 22. In FIG. 1, one coordination agent 20 is disposed in the center server, but multiple coordination agents may be disposed in each vehicle. The coordination agent 20 may be a system incorporating artificial intelligence (AI), or may be, for example, an operator or the like at a call center or the like.

The recommendation history management unit 21 manages the date and time, location, content, utility (score), and so forth, of recommendations made in the past by each of the recommendation agents 10a to 10n.

The recommendation strategy deciding unit 22 decides whether to present recommended content, or decides which content to recommend from the recommended content list, based on the current or past utility (score) of each of the recommendation agents 10a to 10n. The coordination agent 20 may use AI to decide whether to present recommended content, or to decide which content to recommend from the recommended content list. The recommendation strategy deciding unit 22 may decide whether to present recommended content, or decide which content to recommend from the recommended content list, based on the congestion situation at the destination, the congestion situation of parking lots at the destination, the route-to-destination congestion situation, or the like, when the destination is recommended to each agent. The destination congestion situation includes capacity (e.g., number of seats, number of tables) of the destination (e.g., store, facility). The recommendation strategy deciding unit 22 may assign a higher priority to the recommendation of a destination to each recommendation agent the higher the utility (score) thereof is, such that the capacity of the destination is not exceeded. For example, in the case of the recommended content list 70 in FIG. 2, C1, of which the utility (score) is the highest, is provided to the user (user ID: AAA).

The recommendation strategy deciding unit 22 can decide the recommendation strategy, taking into consideration the current capacity of the destination, and the congestion situation in the vicinity of the destination. The recommendation strategy deciding unit 22 can decide the recommendation strategy using AI. When the recommendation strategy deciding unit 22 recommends the same destination (e.g., a shop or restaurant) to multiple recommendation agents, but the number of users (customers) exceeds the capacity of the destination (e.g., the maximum number of seats) at the predicted arrival time, the recommendation strategy deciding unit 22 may refrain from recommending the destination to some of the recommendation agents (users), or may lower the priority. When the recommendation strategy deciding unit 22 recommends the same destination to multiple recommendation agents, but the capacity of parking lots in the vicinity of the destination (e.g., the maximum number of parked cars) is exceeded, the recommendation strategy deciding unit 22 may refrain from recommending the destination to some of the recommendation agents, or may lower the priority. Also, when the recommendation strategy deciding unit 22 recommends the same destination to multiple recommendation agents, but the route-to-destination congestion situation for some of the recommendation agents is extremely high, the recommendation strategy decision unit 22 may refrain from recommending the destination to these recommendation agents, or may lower the priority. It should be noted that these are merely examples, and various recommendation strategies can be decided, which would be understood by one skilled in the art.

When recommending destinations to each of multiple users multiple times over a predetermined period of time (e.g., several months or a year), the recommendation strategy deciding unit 22 may decide a recommendation strategy that is balanced overall for the multiple users. The recommendation strategy deciding unit 22 may calculate the average utility (score) of a destination for each of the users in a predetermined period of time, and may give a higher priority to recommendation of this destination for a user with a low average value. When the recommendation strategy deciding unit 22 recommends the same destination (e.g., a shop or restaurant) to multiple recommendation agents but the capacity of the destination (e.g., the maximum number of seats) is exceeded, the recommendation strategy deciding unit 22 may refrain from recommending the destination to some of the recommendation agents (e.g., users who have a visitation history regarding the destination a predetermined number of times or more in a predetermined period of time in the past), or may lower the priority. The recommendation strategy deciding unit 22 may increase the priority of recommending a destination to a user who did not receive a recommendation for that destination at a previous time. Also, depending on the response history of the user rejecting recommended content, the recommendation of the destination may be refrained from, or the priority may be lowered. The recommendation strategy deciding unit 22 can use AI to decide recommendations that are balanced overall for multiple users. This makes it possible to provide destination recommendations to multiple users in a balanced manner overall, when recommendations to destinations are performed multiple times to each of the multiple users over a predetermined period of time.

Note that the coordination agent 20 may sequentially decide a recommendation strategy regarding the recommended content candidates from the recommendation agents. Alternatively, the coordination agent 20 may collect recommended content candidates from each recommendation agent for a predetermined period (e.g., 30 seconds, 1 minute, or 5 minutes) and decide a recommendation strategy, taking into account the recommended content candidates that are collected.

Exchange of information between recommendation agents and the coordination agent will be described with reference to FIG. 1.

The recommendation agent 10 transmits recommended content that is generated, and the estimated utility (score) and so forth thereof, to the coordination agent 20 (S1). The date and time when the content from the recommendation agent 10 was generated, and the current location, can also be transmitted.

In response to this, the coordination agent 20 transmits, to the recommendation agent 10, content for executing recommendation (S2). In some embodiments, when the coordination agent (e.g., 20) rejects a certain recommended content from a recommendation agent (e.g., 10a) (i.e., determines not to execute the recommendation), the content regarding which recommendation is to be executed may be such that the coordination agent 20 presents the recommendation agent (e.g., 10a) with another recommendation agent (e.g., any of 10b to n) with which there is room for negotiation. This enables the recommendation agent (e.g., 10a) to negotiate with another recommendation agent (e.g., one of 10b to n). In other embodiments, the recommendation agent (e.g., 10a) may renegotiate with the coordination agent 20.

In other embodiments, the content regarding which such recommendation is to be executed may include terms of negotiation with the recommendation agent that is presented (e.g., automated negotiation agent technology, or the like).

In response, the recommendation agent 10 transmits the contents (list) that are recommended to the coordination agent 20 (S3). The response of the user, the utility (score) that the user received, and the date and time, may also be transmitted.

It should be noted that both the computer that is installed in the vehicle and the center server of the vehicle controller system may have functionality of a recommendation agent or a coordination agent.

The present invention is not limited to the above embodiment, and can be modified as appropriate without departing from the spirit thereof.

## Claims

1. A destination recommendation system comprising: a plurality of recommendation agents each recommending a destination to each of users; and a coordination agent coordinating the recommendation agents, wherein
the recommendation agents estimate user preferences of respective users for a destination based on at least one of a destination search history, a destination visit history, a destination setting history, and a response history to recommended content, and estimate state-and-situation of the users based on at least one of vehicle behavior, driving operations, external camera video, in-cabin camera video, and biometric data of the users,
generate recommended content candidates, utility of the recommended content candidates, date and time, and current locations of the users, respectively, based on the user preferences, and the state-and-situation of the users that are estimated, and at least one of a destination congestion situation, a destination vicinity parking lot congestion situation, and a route-to-destination congestion situation, and provide each of the recommended content candidates that are generated, the utility, the date and time, and the current locations of the users, to the coordination agent,
the coordination agent decides, for each of the recommendation agents, whether to present recommended content, or decides a recommended content from among the recommended content candidates, based on at least one of the congestion situation of the destination, the congestion situation of parking lots in a vicinity of the destination, and the route-to-destination congestion situation at the time the destination was recommended to each of the recommendation agents, and also based on the current or past utility of each of the recommendation agents, and provides each of the recommendation agents with whether to present the recommended content that is decided upon, and the recommended content, and
each of the recommendation agents executes presentation of the recommended content to each of the users based on whether to present the recommended content that is decided upon and the recommended content.

2. The destination recommendation system according to claim 1, wherein, when recommending destinations to each of multiple users for multiple times over a predetermined period of time, the coordination agent calculates an average of utility of the destinations for each of the users during the predetermined period of time, and based on the average of utility for each of the users that is calculated, decides, for each of the recommendation agents, whether to present the recommended content, or decides the recommended content from among the recommended content candidates.

3. The destination recommendation system according to claim 1, wherein, when rejecting a certain recommended content candidate from the recommendation agent, the coordination agent provides the recommendation agent with another recommendation agent regarding which there is room for negotiation.

4. The destination recommendation system according to claim 1, wherein, following executing presentation of the recommended content to each of the users, each of the recommendation agents provides the recommended content, response of the user, the utility that is obtained by the user, and date and time, to the coordination agent.

5. The destination recommendation system according to claim 1, wherein the coordination agent includes artificial intelligence (AI).
